(19)

Europäisches Patentamt
European Patent Office
Office européen des brevets

(11) **EP 2 158 225 B1**

(12) **EUROPEAN PATENT SPECIFICATION**

(45) Date of publication and mention
of the grant of the patent:
**20.02.2019 Bulletin 2019/08**

(51) Int Cl.:
***C08C 19/02*** (2006.01)  ***C08F 8/04*** (2006.01)

(21) Application number: **08758961.0**

(22) Date of filing: **30.05.2008**

(86) International application number:
**PCT/EP2008/004396**

(87) International publication number:
**WO 2008/151741 (18.12.2008 Gazette 2008/51)**

(54) **PROCESS FOR THE PARTIAL HYDROGENATION OF RANDOM VINYL ARENE - CONJUGATED DIENE COPOLYMERS**

VERFAHREN ZUR PARTIELLEN HYDRIERUNG VON STATISTISCH AUFGEBAUTEN COPOLYMEREN AUS VINYLAREN UND KONJUGIERTEM DIEN

PROCÉDÉ D'HYDROGÉNATION PARTIELLE DE COPOLYMÈRES ALÉATOIRES VINYLARÈNE-DIÈNE CONJUGUÉ

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **15.06.2007 IT MI20071210**

(43) Date of publication of application:
**03.03.2010 Bulletin 2010/09**

(73) Proprietor: **versalis S.p.A.**
**20097 San Donato Milanese (MI) (IT)**

(72) Inventors:
• **VIOLA, Gian, Tommaso**
**I-48015 Cervia-Ravenna (IT)**
• **SODDU, Luca**
**I-40024 Castel San Pietro Terme(Bologna) (IT)**

• **ZINNA, Marianna**
**I-48100 Ravenna (IT)**

(74) Representative: **Bottero, Carlo et al**
**Barzanò & Zanardo Milano S.p.A.**
**Via Borgonuovo, 10**
**20121 Milano (IT)**

(56) References cited:
**EP-A- 0 339 986  EP-A- 0 816 382**
**EP-A- 0 914 867  EP-A- 1 721 910**
**US-B2- 6 858 683**

Remarks:
The file contains technical information submitted after the application was filed and not included in this specification

**Description**

The present invention relates to a process for the hydrogenation of random vinyl arene - conjugated diene copolymers, in particular styrene/butadiene, both linear and branched, prepared in solution by means of polymerization initiated by organolithium derivatives in the presence of a particular randomizing agent, i.e. ethyl ether of tetrahydrofuranyl methanol (THFA-Ethyl).

The term "random styrene-butadiene copolymer" means styrene-butadiene copolymers in which the styrene content in the form of blocks with respect to bound styrene is about 10% or less, as measured with the oxidative decomposition method, described by I.M. Kolthoff et al. J. Polymer Science, Vol. 1 page 429 (1946) or, more recently, by Viola et. al. (Sequence distribution of styrene-butadiene copolymers by ozonolysis, HPLC (high performance liquid chromatography and gas chromatographic-mass spectrometric techniques, J Chromatography A, 117 (1994).

In the following description, reference will be made to styrene as a typical vinyl arene and to butadiene as a typical conjugated diene, without limiting ourselves to these compounds.

It is known that in copolymerization initiated by organolithium derivatives, in an inert solvent and in the absence of polar species, due to the preference of butadiene of undergoing homopolymerization, styrene does not participate in the reaction until the almost complete conversion of the diene monomer; this behaviour causes the formation of a block copolymer of the p(butadiene)-co(polybutadiene-polystyrene)-p(styrene) type, rather than a copolymer in which the vinyl aromatic monomer is homogeneously distributed along the molecular chain; in the latter case the copolymer is defined "random". The part of copolymer between the two polybutadiene and styrene blocks consists of a portion having a composition progressively richer in one of the two monomers, the so-called "tapered" junction, whose dimensions are determined by kinetical reasons. The characteristics of this type of materials are those typical of block copolymers rather than those of a random copolymer, and this makes their use unsuitable in the tyre industry.

It is also known that the presence in solution of certain particular aprotic polar substances, called "modifiers", causes a modification in the microstructure of the polydiene homopolymer (or copolymer) when the polymerization, initiated by lithium alkyls, is carried out in a mixture of diene and vinyl aromatic monomers. The term microstructure of the diene chain means the different way in which the diene co-monomer can be arranged in the macromolecule, i.e. in the 1,4-cis, 1,4-trans or 1,2 form; this latter structure will also be mentioned hereunder as vinyl unit. In particular, in the case of the homopolymerization of butadiene, the use of modifiers causes an increase in the content of the 1,2 unit, whereas in the case of a random styrene-butadiene copolymer, in addition to the above mentioned increase in the 1,2 unit, the main effect is that of an improved distribution of the vinyl aromatic monomer along the molecular chain. Modifiers consisting of ethers are preferred among those adopted in the rubber industry; modifiers of the well-known aminic type, have been abandoned because of toxicological and environmental problems. The optimum concentration of the "modifier" for obtaining a random styrene-diene polymer depends on various factors, among which mainly its chemical structure, the reaction temperature and the quantity of styrene which reacts with the diene monomer. In general, modifiers progressively lose their capacity of randomly distributing styrene along the molecular chain with an increase in the temperature. With reference to the physico-chemical characteristics of modifiers belonging to the group of ethers, there are two different groups, depending on the structure and behaviour with respect to the cation (typically $Li^+$). Compounds belonging to the first group exert a solvating action with respect to the active centre due to the single polarity of the molecule which, as it does not have at least two sites suitable for being bound to the cation, does not exert a chelating action, whereas those belonging to the second group exert a chelating action with respect to the cation. The result is that the modifiers belonging to the first group must be used in a high molar ratio with respect to the lithium (typically the ether:Li molar ratio ranges from 100 to 1,000), whereas those belonging to the second group are used in a molar ratio ranging from 0.5 to 10. In all cases, the ratio is in relation to the polymerization temperature in addition to the microstructure and desired composition. THF is the typical representative of the first group modifiers, whereas among those belonging to the second group, 2,2-bi(2-oxolanyl) propane (described in US-A-4,429,090 and US-A-4,429,091) is mentioned as a non-limiting example.

In practice, the main difference between the two groups of modifiers mentioned above, specifically consists in the quantity necessary for obtaining the same vinyl promoting and randomizing effect. The difference in the use of the two types of modifiers is represented by the fact that, when modifiers belonging to the first group (solvating modifiers) are used, the termination reactions of the active centre are accelerated, due to the acid - base reactions among the latter and ether, mainly due to the higher percentage of the latter. For this reason, the rubber industry is interested in finding chelating modifiers which, when used in much lower quantities than the solvating modifiers, minimize the termination reactions of the active centres whose negative effect will be clarified hereunder.

A further advantage deriving from the use of chelating modifiers is that their higher boiling point with respect to the solvent facilitates separation from the same solvent by distillation, thus allowing rapid production changes on the same production line.

The co-pending patent application in the name of the same Applicant, MI 06 A 00385 describes the preparation in continuous of random linear styrene/butadiene copolymers in the presence of a particular chelating agent, 2-methoxyethyl tetrahydrofuran (THFA-Ethyl).

The use of the above chelating ether allows considerable improvements with respect to the chelating agents previously used, as 2-methoxyethyl tetrahydrofuran (THFA-Ethyl) guarantees an optimum compromise between the capacity of randomly distributing the aromatic monomer and maintaining a high persistence of the polymeric chain terminals, even at temperatures exceeding 70°C.

US-A-6,858,683 describes the preparation of random branched styrene/butadiene copolymers, also synthesized in the presence of THFA-Ethyl. More details on this process will be provided further on.

EP0816382 discloses a process for the partial hydrogenation of a block SBS copolymer which comprises reacting the copolymer dissolved in cyclohexane with hydrogen in the presence of titanium dicyclopentadienyl dichloride and di-isobutylmagnesium.

As is known in the state of the art, random vinyl arene/conjugated diene copolymers can be subjected to partial hydrogenation of the diene double bonds. The above hydrogenation is normally effected with hydrogen, in the presence of a titanium complex, preferably titanium dicyclopentadienyl dichloride and one or more alkylating agents selected from lithium alkyls, aluminium alkyls and magnesium alkyls, preferably lithium alkyls.

It has been found that the partial hydrogenation of the above copolymers (i.e. both linear and branched copolymers synthesized in the presence of THFA-Ethyl) carried out in the presence of the titanium complex and the most common alkylating agent, i.e. lithium alkyl, has quite significant drawbacks. Considerable variations in the molecular weight have been observed due to parasite reactions active under conditions of a low hydrogen concentration, as can be produced in the partial hydrogenation of a polymeric solution, highly viscous due to the concentration and high molecular weight of the copolymer in solution. It has also been found that the presence of lithium alkyl as alkylating agent always causes increases in the polydispersivity index(Mw/Mn) for any pressure range, i.e. from 0 to 2,000 kPa, in particular at low pressures. Under the experimental conditions adopted, it has been observed that the increase in the Mw/Mn is associated with a reduction in the Mooney viscosity, demonstrating the prevalence of molecular scission reactions with respect to branching reactions. It is obvious that scission reactions generate a fraction of polymer of little use in the formation, after vulcanization, of an elastic lattice, with consequent deterioration in the mechanical and dynamic properties of the vulcanized product.

It has now being found that only the use of magnesium alkyls as alkylating agents allows the drawbacks mentioned above to be overcome, even under conditions of low hydrogen pressure.

In accordance with this, the present invention relates to a process for the partial hydrogenation of both linear and branched random vinyl arene - conjugated diene copolymers, the term branched meaning copolymers in which the macromolecules are bound with each other by means of carbon -carbon bonds and in which the branchings mainly interest high or very high molecular weight chains, the above-mentioned random copolymers, being prepared in solution, in the presence of THFA-Ethyl as randomizing agent, which comprises:

reacting the random vinyl arene-conjugated diene copolymer dissolved in a hydrocarbon solvent, with hydrogen, in the presence of a titanium complex and an alkylating agent, until the desired hydrogenation degree is obtained, the above process being characterized in that the alkylating agent is selected from compounds having the general formula $MgR_1R_2$, wherein $R_1$ and $R_2$, the same or different, are selected from alkyl radicals having from 1 to 12, preferably from 2 to 8, carbon atoms and wherein the hydrogenation degree ranges from 20 to 90%.

Typical examples of vinyl arenes are 2-vinyl naphthene, 1-vinyl naphthene, styrene, and relative alkylated compounds. In the preferred embodiment, the vinyl arene is styrene.

The conjugated dienes are 1,3 dienes having from 4 to 12, preferably from 4 to 8 carbon atoms. Examples of these dienes are 1,3-butadiene, isoprene, 2,3-dimethyl-1,3-butadiene, 1,3-pentadiene (piperylene), 2-methyl-3-ethyl-1,3-butadiene, 1,3-octadiene. In the preferred embodiment, the conjugated diene monomers are selected from 1,3-butadiene and isoprene, preferably 1,3-butadiene.

As described above, the term "random styrene-butadiene copolymers" means styrene-butadiene copolymers wherein the styrene content, in the form of blocks, with respect to bound styrene, is 10% or less.

The above random styrene-butadiene copolymers, both linear and branched, have a styrene content of 15 to 50% by weight, preferably from 20 to 45% by weight.

As it is known, butadiene can enter the polymeric chain as cis-1,4 bond (cis bond) trans-1,4 bond (trans bond), 1,2 bond (vinyl unit). The content of vinyl units is defined as the ratio between the vinyl unit and the sum of the cis, trans and vinyl bonds. The content of the vinyl unit of the diene portion of the random styrene-butadiene copolymer, before the partial hydrogenation, preferably ranges from 10 to 80%, even more preferably from 20 to 70%.

The term "partially hydrogenated" means that the hydrogenation degree of the diene part of the styrene-butadiene copolymer is lower than 100%. Preferably from 20 to 90% of the double bonds of the diene portion undergo hydrogenation, even more preferably from 30 to 80%.

The random styrene-butadiene copolymer, both linear and branched, to be subjected to hydrogenation, has a weight average molecular weight (Mw) ranging from 200,000 to 1,000,000 g/mole and a molecular weight distribution (Mw/Mn) ranging from 1 to 5, the Mw preferably ranges from 300,000 to 800,000 and the Mw/Mn from 1 to 4, more preferably from 1 to 3. The Mooney viscosity of the non-oil-extended polymer $ML_{1+4}$ (100°C) ranges from 30 to 200, preferably from 50 to 150, whereas the corresponding polymer extended with extending oils, preferably non-aromatic, has a Mooney viscosity at 100°C within the range of 30-100.

As far as the preparation of the random linear copolymer is concerned, it can be carried out either batchwise or in continuous. This copolymerization is initiated by lithium alkyl, and is carried out under isothermal conditions, in an aliphatic or cycloaliphatic solvent, at a temperature ranging from 30 to 120°C, preferably between 50 and 110°C, in the presence of 2-methoxyethyltetrahydrofuran (THFA-ethyl). The use of the above modifier is necessary in order to prevent, and/or reduce termination reactions of the polymeric chains. Further details of the above process and the products thus obtained, are provided in the above-mentioned co-pending patent application of the same Appellant MI 06 A 00385.

As far as random branched styrene-butadiene copolymers are concerned, these are prepared in a hydrocarbon solution by means of anionic polymerization initiated by lithium alkyl, in the presence of THFA-Ethyl and subsequent reaction of the active terminals with alkyl bromides. More specifically, at the end of the vinyl arene-conjugated diene copolymerization to give a random linear copolymer, a quantity of lithium alkyl from 1 to 4 molar times with respect to the quantity of lithium alkyl previously used, is added to the polymeric solution and, subsequently, a quantity of bromo-alkyl having the formula R-Br, in ratios, with respect to the total lithium alkyl used, from 0.4/1 to 0.9/1. In the preferred embodiment, R is a primary $C_4$-$C_{10}$ alkyl radical.

More details are provided in US-A-6,858,683.

GT Viola (Journal of Polymer Science Pr. A; Polymer Chemistry Vol 35, 17-25 (1997) describes the possible formation mechanism of the above-mentioned branched elastomers. The mechanism at the basis of the formation of the branched structure is of the radicalic type and includes the formation of macroradicals following the extraction of an allyl proton positioned in a polybutadiene segment of the macromolecule, due to a reaction between an alkyl radical which is formed by reaction between an alkyl alide (typically octyl bromide) and lithium butyl. The randomness of the extraction of the allyl proton from a macromolecule favours the formation of macroradicals characterized in having a molecular weight higher than the Weight Average Molecular Weight Mw: the subsequent coupling of these macroradicals causes the formation of branched structures characterized in having a long chain branching.

The branching degree of the copolymers synthesized in continuous (therefore with a molecular weight distribution characterized by a polydispersity index > 1.5) is expressed by the alpha (a) parameter which is lower than 0.58, this value corresponding to a linear (co)polymer. It should be remembered that, whereas linear (co)polymers synthesized in continuous have an alpha value of 0.58, highly branched (co)polymers have an alpha value of 0.35 to 0.40. The intermediate alpha values between 0.58 and 0.35, are correlated to a progressive increase in the branching degree of the copolymer. The definition of alpha ($\alpha$) is indicated in the experimental section.

For polymers synthesized batchwise (with a molecular weight distribution characterized by a polydispersity index very close to one) the measurement of the variation in the macromolecule branching degree with respect to a reference polymer, is carried out by measuring the radium gyration by means of MALLS, as will be described in the experimental section.

As far as the hydrogenation process of the present invention is concerned, a suspension of titanium dicyclopentadienyl dichloride in hexane or another aliphatic or aromatic suspending hydrocarbon, is added to the solution of the polymer to be hydrogenated, containing from 5 to 20% weight of copolymer, preferably from 8 to 15% weight. The quantity of titanium metal, referring to the rubber, ranges from 25 to 200 ppm, preferably from 75 to 150 ppm. A solution of Mg-alkyl is added to the mixture containing, as already mentioned, the polymer in solution and the suspension of titanium dicyclopentadienyl dichloride, in such a quantity that the molar ratio between Mg and Ti is within the range of 0.8/1 to 2/1, preferably from 1/1 to 1.5/1. In a preferred embodiment, the hydrogenation is preferably effected in a continuous reactor with a height/diameter ratio ranging from 3 to 20, preferably from 5 and 15, equipped with an axial stirrer and, in its interior, with perforated septa, suitable for increasing the residence time of the hydrogen bubbles inside the liquid. The temperature control of the polymeric solutions is effected by passing glycolated water in a specific jacket situated outside the reactor. The polymeric solution containing the hydrogenation catalyst consisting of the reaction product between titanium dicyclopentadienyl dichloride and magnesium alkyl, is fed together with hydrogen onto the bottom of the reactor, at a pressure ranging from 400 to 2,000 kPa, preferably from 500 to 1,500 kPa, and at a temperature ranging from 70 to 150°C, preferably from 80 to 110°C. The residence time of the polymeric solution is regulated so that the hydrogenation degree ranges from 20 to 90%, preferably from 30 to 80%, hydrogenation degree meaning the molar ratio between the residual unsaturated unit and the total unit (saturated + unsaturated) relating to the diene portion of the original polymer. The hydrogenation degree is continuously monitored by means of an N.I.R. probe situated inside the reactor, and measuring the progressive disappearance of the absorption band at 1630 nm (absorption of the 1,2 vinyl unit); a further control is carried out on instantaneous samples by means of IR spectrometry measuring the intensity of the absorption bands of the 1,2 unit (910 cm$^{-1}$), the 1,4-cis unit (730 cm$^{-1}$) and the 1,4 trans unit (968 cm$^{-1}$) suitably

corrected as a result of the contribution of the styrene absorption band at 699 cm$^{-1}$.

The polymeric solution is collected, at the outlet of the hydrogenation reactor, in pressurized containers where a mixture consisting of antioxidants is added, which, according to the known art, belong to the group of the hindered phenols (primary antioxidant) together with an organic phosphite or phosphonite (secondary antioxidant) in a quantity respectively ranging from 0.05 to 0.5 parts of primary antioxidant per 100 g of rubber and from 0.1 to 1 parts of secondary antioxidant per 100 g of rubber. A non-limiting example of a primary antioxidant is 4-[[4,6-bis(octylthio)-1,3,5-triazine-2-yl]amino]-2,6-bis(1,1-methylethyl)phenol (CAS Nr 991-84-4), Irganox® 565, whereas a non-limiting example of a secondary antioxidant is Tris(2,4-di-t-butylphenyl) phosphate (CAS Nr 31570-04-4) Irgafos 168® (Ciba).

After the addition of antioxidants, an extender oil can be added to the polymeric solution, according to an embodiment, preferably non-aromatic, or with a low aromatic content, for example MES (Mild Extraction Solvate) oils, or TDAE oils (Treated Distillate Aromatic Extract), wherein the quantity of aromatic compounds is lower than 20%. The extender oils are normally added in a quantity ranging from 10 to 50 parts of oil per 100 parts of rubber, preferably between 20 and 40 parts of oil per 100 parts of rubber. After the addition of the oil, the polymeric solution is sent to stirred recipients containing boiling water, heated by the continuous addition of water vapour. The solvent is eliminated in said containers and the resulting crumbs of damp rubber, after separation from the water by passage over sieves, are sent to a mechanical drying consisting of two mechanical extruders. In the first extruder (expeller) the water is eliminated by squeezing up to a content ranging from 3 to 12% by weight, whereas in the second extruder (expander) the water is eliminated by heating the mass to temperatures of 160-180°C and eliminated in the form of vapour. The dried rubber is then packed into bales by pressing.

In the experimental part it will be demonstrated that the use of a hydrogenation catalyst based on Titanium + an alkylating agent, selected from magnesium alkyls, allows the partial hydrogenation of a random styrene-butadiene polymer, prepared in solution, in the presence of THFA-Ethyl, avoiding the formation of high molecular weight fractions, and contemporaneously, with a low molecular weight with a consequent increase in the polydispersity index Mw/Mn.

The following examples are provided for a better understanding of the present invention.

The following examples also indicate hydrogenation conditions wherein the pressure of H$_2$ is zero, i.e. in the absence of hydrogen, to better reveal the phenomena which lead to the increase in Mw/Mn, correlated to the type of alkyl used.

**EXAMPLES**

CHARACTERIZATION OF THE SYNTHESIZED COPOLYMERS

**1. Determination of the distribution of the molecular masses (MWD).**

The determination of the distribution of the molecular masses is carried out by gel permeation chromatography (GPC) also known as exclusion chromatography, by eluting a THF solution of the polymer to be analyzed, through a series of columns containing a solid phase consisting of crosslinked polystyrene with pores having different dimensions.

Instrumental configuration:

HP 1090 Chromatograph

Solvent THF

Temperature 25°C

PL-Gel column 10$^5$ - 10$^5$ - 10$^4$ - 10$^3$

RI HP 1047 A Detector

the determination of the molecular masses is effected according to the Universal Calibration method, using the following values for k and $\alpha$, in relation to the quantity of styrene:

| | | |
|---|---|---|
| Styrene = 25% | k = 0.000389 | $\alpha$ = 0.693 |
| Styrene = 30% | k = 0.000368 | $\alpha$ = 0.693 |
| Styrene = 40% | k = 0.000338 | $\alpha$ = 0.693 |

**2. Determination of the average molecular weight and measurement of the branching degree by means of the SEC/MALLS technique** according to an internal method taken from the work described in *Application Note, Nr. 9*, Wyatt Technology and Pavel Kratochvil, Classical Light Scattering from Polymer Solutions, Polymer Science Library, 5, Elsevier Science Publishers BV 1987.

By coupling a multi-angle light scattering detector (MALLS) with a traditional elution system SEC/RI, it is possible to carry out an absolute measurement of the molecular weight and, contemporaneously, of the radius gyration of the macromolecules which are separated by the chromatographic system. The quantity of light scattered by a macromolecular species in solution can in fact be directly used for obtaining its molecular weight, whereas the angular variation of the scattering is directly correlated to the average dimensions of the molecule in solution. The basis relationship used is the following:

$$\frac{K^*c}{R_\theta} = \frac{1}{M_w P_\theta} + 2A_2 c \qquad 1)$$

wherein:

$K^*$ = optical constant, depending on the wave-length of the light used, the dn/dc of the polymer, the solvent used.
$M_w$ = weight average molecular weight
c = concentration of the polymeric solution.
$R_\theta$ = intensity of diffused light measured at an angle $\theta$
$P_\theta$ = this function describes the angular variation of the diffused light
$A_2$ = second virial coefficient of the solvent, equal to 1 when the angle $\theta$ is equal to zero.

For very low concentrations (typical of a SEC system) equation 1 is reduced to

$$\frac{K^*c}{R_\theta} = \frac{1}{M_w P_\theta} \qquad 2)$$

and by carrying out the measurement on several angles, the extrapolation to angle null of the function $K^*c/R_\theta$ in relation to $\mathrm{sen}^2\theta/2$ directly provides the molecular weight from the value of the intercept and the gyration angle from the slope.

Furthermore, as this measurement is carried out for any slice of the chromatogram, it is possible to obtain a distribution of both the molecular weight and the gyration radius.

The macromolecular dimensions in solution are directly correlated to their branching degree: with the same molecular weight, the smaller the dimensions of the macromolecule with respect to the linear equivalent, the higher the branching degree will be; as a macromolecule which has nodes in its interior (radial structures and branched structures) it possesses, with the same molecular weight, a smaller hydrodynamic volume with respect to a linear molecule, the slope of the straight line described above (coefficient $\alpha$) will be greater or smaller in relation to the lower or higher interconnection degree of the structures. In particular, for linear macromolecules, the proportionality coefficient between the gyration radius and the molecular weight, is equal to 0.58, whereas, for branched molecules, this value proves to be progressively lower with an increase in the nodes present in the macromolecule. As an example, the random styrene-butadiene copolymer prepared by means of radicalic polymerization in emulsion (E-SBR) has an $\alpha$ value equal to 0.35-0.38.

The information relating to the macrostructure of a polymer is deduced quantitatively by evaluating the branching index $g_M$, defined for each macromolecule as the ratio between the average quadratic gyration radius of the branched macromolecule and that of the linear macromolecule, with the same molecular weight:

$$g_{Mi} = [<r^2>_b / <r^2>_l]_{Mi} \qquad 3)$$

The average branching index $g_M$ represents the average of this ratio in relation to the distribution of the molecular masses and ranges from 0 to 1.

In the case of macromolecules synthesized in batch reactors, the molecular weight distribution has a polydispersity index ranging from 1 to 1.1; in this case the measurement of the branching degree is carried out by means of a static MALLS measurement of the gyration radius (r); the measurement in THF at 25°C of the gyration radius of a linear styrene-butadiene copolymer containing 40% of styrene and 40% of vinyl and a molecular weight of 220,000 g/mole, gives an $r_1$ value of 24 $\pm$ 1 nm.

Instrumental configuration:

RI HP 1047 A detector
MALLS Wyatt Technology mod. DAWN-DSP
Differential refractometer KMX 16 - CROMATIX

** **Mooney viscosity**

Monsanto viscosimeter MV2000E, ASTMD1646.

Experimental examples

The examples from number 1 to number 4 refer to the partial hydrogenation of a random linear styrene-butadiene copolymer prepared batchwise, with an average styrene composition of 40% and containing, in the diene part, an average of 40% of vinyl units, said random polymer being hydrogenated with a catalyst prepared starting from titanium dicyclopentadienyl dichloride and lithium alkyl, with a hydrogen pressure which can vary from 0 to 1,500 kPa.

The examples from number 5 to number 8 refer to the partial hydrogenation of a random linear styrene-butadiene copolymer prepared batchwise, with an average styrene content of 40% and containing in the diene portion, an average of 40% of vinyl unit, said random polymer being hydrogenated by means of a catalyst prepared starting from titanium dicyclopentadienyl dichloride and magnesium alkyl, at hydrogen pressures ranging from 0 to 1,500 kPa.

The examples from number 9 to number 11 refer to the partial hydrogenation with a hydrogenation catalyst consisting of n-butyl lithium and titanium dicyclopentadienyldichloride, of random linear styrene-butadiene copolymers prepared by means of a continuous process.

The examples from number 12 to 14 refer to the partial hydrogenation with a hydrogenation catalyst consisting of magnesium butyl-ethyl and titanium dicyclopentadienyldichloride, of random linear styrene-butadiene copolymers prepared by means of a continuous process.

The examples from number 15 to 17 refer to the preparation and subsequent partial hydrogenation of a random branched copolymer having a styrene content normally equal to 40% and the same content of vinyl unit, and its subsequent partial hydrogenation with catalysts based on titanium dicyclopentadienyldichloride, using n-butyl lithium and magnesium butyl ethyl as alkylating agents.

The samples are codified with an abbreviation wherein:

1. The first letter indicates the styrene composition as styrene and vinyl, (A indicates a copolymer containing 40% of styrene and 40% of vinyl unit; B indicates a copolymer with an average content of 25% of styrene and about 60% of vinyl units; C indicates a copolymer containing 25% of styrene and about 25% of vinyl unit).
2. The second letter indicates the type of reactor in which the copolymer was synthesized (B stands for batch, C for continuous). The possible subscript "$_R$" indicates the presence of branchings.
3. The third letter consists of an H and is only used for hydrogenated polymers.
4. The number in fourth position indicates the hydrogenation pressure (1 indicates a partial hydrogen pressure equal to 1,500 kPa, 2 a partial hydrogen pressure of 1,000 kPa, 3 a partial hydrogen pressure of 500 kPa, 4 indicates the absence of hydrogen).
5. The asterisk indicates a comparison product, typically partially hydrogenated copolymers, for whose preparation n-butyl lithium was used as alkylating agent.

With respect to the ratio between the alkylating agent and titanium, expressed as moles of metal alkyl on moles of titanium cyclopentadienyl, indicated hereafter in short as ME/Ti (Me = Li, Mg) it should be noted that the maximum catalytic activity, measured by progressively varying the Me/Ti ratio in the preparation of the catalyst, proves to be, when Me = Mg, within the range of 1.0 - 2.0, more specifically between 1.1 and 1.5, whereas when Me = Li, said maximum catalytic activity falls within the range of 3.5 - 4.5 and, more specifically, between 3.8 and 4.2. The positioning of the maximum value of the catalytic activity in relation to the Me/Ti ratio mainly if not exclusively depends on the termination degree of the active terminals of the random copolymer when titanium dicyclopentadienyldichloride is added to the solution of the copolymer. A quantity of termination agent lower than the quantity of residual active lithium causes a partial activation of titanocene on the part of the residual reducing species, whereas an excess of termination agent causes the partial deactivation of the catalyst activator, thus making it necessary to use a higher quantity.

**Comparative example 1 (ABH1\*)** - Preparation of the random styrene - butadiene copolymer in batch (Styrene 40%, 1,2 40%, indicated with the initials AB) and its partial hydrogenation at a partial hydrogen pressure of 1,500 kPa, with Li/Ti as catalyst.

The copolymerization was carried out in a 20 litre reactor, from which, at the complete conversion, the polymeric solution was transferred, by pressure difference, to a perfectly anhydrous container, under a nitrogen atmosphere, from which, by pressure difference, an aliquot of 1 litre of polymeric solution was subsequently poured into a hydrogenation reactor having a volume of 2 litres. In this way, it was possible to carry out a series of hydrogenations under variable conditions, starting from the same parent polymer. Both the synthesis reactor and the hydrogenation reactor were equipped with stirrers and cooling jackets in which a diathermic liquid was circulated to limit the reaction exotherm, within a range not higher than $\pm$ 5°C the reference value, and all the utilities necessary for operating in an anhydrous nitrogen atmosphere in the absence of oxygen.

3.80 moles of n-butyl lithium (nBL) in a hexane solution were added to the reaction mixture, consisting of 9,200 g of cyclohexane, 310 g of styrene, 480 g of butadiene, 100 ppm, equal to 2.9 mmoles of THFA-ethyl (in a molar ratio with lithium equal to 0.76), once the reaction mixture had reached a temperature of 80°C.

45 minutes after the addition of the initiator, once the completeness of the reaction had been verified by means of a gas-chromatographic analysis of a sample of the polymeric solution, the quantity of monochloro trimethyl silane (TMCS) necessary for the complete elimination of the active terminals, was added. The termination reaction was carried out by measuring the absorbance variation in the range between 250 and 300 nm, by means of a UV spectrophotometer the successive additions of 0.5 mmoles of TMCS, allowing a time interval between the subsequent aliquots necessary for the absorbance signal to stabilize; when there were no variations at 5' the termination reaction was considered complete.

The resulting non-hydrogenated polymer indicated with the initials AB, proved to contain 39.9% of styrene and 40.2 of a vinyl unit referring to the diene portion of the polymer. The number average molecular weight measured by GPC proved to be equal to 220,000 g/mole with a polydispersity index of 1.07. The measurement of the radius of gyration, carried out by means of MALLS, gave a value of 24 $\pm$ 1 nm identifying the polymer as linear.

After transferring 1 litre of polymeric solution containing the polymer AB, measured by means of a mass measuring instrument, into the hydrogenation reactor, the polymer solution was brought back to a temperature of 80°C and 0.15 mmoles of titanium dicyclopentadienyl dichloride, in a cyclohexane suspension, equal to 120 ppm of titanium with respect to the copolymer, were added; the reactor was then pressurized by adding hydrogen in such a quantity that its partial pressure at the reactor temperature was 1,500 kPa, and 0.6 mmoles of an alkylating agent consisting of n-butyl lithium (nBL) were then added.

After 15 minutes of reaction, IR analysis gave, for the hydrogenation degree of the polymer indicated as ABH1*, a value of 39.2%. The reactor was then discharged, 0.1 phr of Irganox™ 565 and 0.5 phr of Irgafos™ 168 were added to the polymeric solution. The solvent was then eliminated, by stripping under a stream of vapour. The rubber, which had been previously squeezed, was dried in a vacuum oven for at least 36 hours at a temperature of 70°C. The determination of the molecular weight distribution effected by means of gel elution chromatography provided a value of the number average molecular weight of 223,000 g/mole and a polydispersity index value (Mw/Mn) equal to 1.17 for the hydrogenated product. MALLS analysis gave a value of 23 $\pm$ 1 nm for the gyration radius (see table 1).

**Comparative example 2 (ABH2*)** - Partial hydrogenation of the random linear polymer AB at a partial hydrogen pressure of 1,000 kPa with Li/Ti as catalyst

After transferring 1 litre of polymeric solution containing the polymer AB, measured by means of a mass measuring instrument, into the hydrogenation reactor, the polymer solution was brought back to a temperature of 80°C and titanium dicyclopentadienyl dichloride, in a cyclohexane suspension, was added in a quantity of 120 ppm of titanium with respect to the rubber in solution. The reactor was then pressurized by adding hydrogen in such a quantity that its partial pressure at the reactor temperature was 1,000 kPa, and 0.6 mmoles of an alkylating agent consisting of n-butyl lithium (nBL) were then added.

By operating using the same procedure as described in example 1, after 15 minutes of reaction, IR analysis gave a hydrogenation degree of the polymer indicated as ABH2*, a value equal to 38.5%. The molecular weight distribution was determined by means of gel permeation chromatography (GPC) which gave a value of the number average molecular weight of 231,000 g/mole and a polydispersity index value (Mw/Mn) equal to 1.22, for the hydrogenated product. MALLS analysis gave a value of the radius of gyration equal to 21 $\pm$ 1 nm (see Table 1).

**Comparative example 3 (ABH3*)** - Partial hydrogenation of the random linear polymer AB at a partial hydrogen pressure of 500 kPa with Li/Ti as catalyst

After transferring 1 litre of polymeric solution containing the polymer AB, measured by means of a mass measuring instrument, into the hydrogenation reactor, the polymer solution was brought back to a temperature of 80°C and titanium dicyclopentadienyl dichloride, in a cyclohexane suspension, was added in a quantity of 120 ppm of titanium with respect to the rubber in solution. The reactor was then pressurized by adding hydrogen in such a quantity that its partial pressure at the reactor temperature was 500 kPa, and 0.6 mmoles of an alkylating agent consisting of n-butyl lithium (nBL) were then added.

By operating using the same procedure as described in example 1, after 20 minutes of reaction, IR analysis gave a hydrogenation degree of the polymer indicated as ABH3*, a value equal to 40.4%. The molecular weight distribution was determined by means of gel permeation chromatography (GPC) which gave a value of the number average molecular weight of 239,000 g/mole and a polydispersity index value (Mw/Mn) equal to 1.29, for the hydrogenated product. MALLS analysis gave a value of the radius of gyration equal to 19 $\pm$ 1 nm (see Table 1).

**Comparative example 4 (ABH4*)** - Treatment of the random linear polymer AB with the hydrogenation catalyst Li/Ti in the absence of hydrogen

After transferring 1 litre of polymeric solution containing the polymer AB, measured by means of a mass measuring instrument, into the hydrogenation reactor, the polymer solution was brought back to a temperature of 80°C and titanium dicyclopentadienyl dichloride, in a cyclohexane suspension, was added in a quantity of 120 ppm of titanium with respect to the rubber in solution; a quantity of 0.4 mmoles of an alkylating agent consisting of n-butyl lithium (nBL) was then added in the total absence of hydrogen.

After 20', during which the solution was kept at 80°C, the reactor was discharged operating analogously to what is described in example 1.

The polymer indicated as ABH4* was recovered and, after the addition of antioxidants and drying, gave a number average molecular weight value of 366,000 g/mole and a polydispersity index value (Mw/Mn) equal to 2.11. MALLS analysis gave a value of the radius of gyration equal to 16 $\pm$ 2 nm (see table 1).

Table 1

| Sample | $H_2$ (kPa) | G.I. (%) | Li/Ti (moles/moles) | Mn | Mw/Mn | r (nm) |
|---|---|---|---|---|---|---|
| **AB** | --- | 0 | | 220,000 | 1.07 | 24 $\pm$ 1 |
| **ABH1*** | 1500 | 39.2 | 4/1 | 223,000 | 1.17 | 23 $\pm$ 1 |
| **ABH2*** | 1000 | 38.5 | 4/1 | 231,000 | 1.22 | 21 $\pm$ 1 |
| **ABH3*** | 500 | 40.4 | 4/1 | 239,000 | 1.29 | 19 $\pm$ 1 |
| **ABH4*** | 0 | 0 | 4/1 | 366,000 | 2.11 | 16 $\pm$ 2 |

The data of table 1 show how the hydrogenation catalyst consisting of titanium dicyclopentadienyl dichloride changes the macrostructure of the random styrene-butadiene AB copolymer synthesized as described in example 1, and that said macrostructure proves to have a progressively increasing polydispersity index and a branching degree inversely proportional to the partial hydrogen pressure. Furthermore, in the absence of hydrogen, under the same conditions in which the hydrogenation was effected, the catalyst based on lithium alkyl causes an increase in the high molecular weight fraction and, at the same time, a strong increase in the fraction consisting of molecular weights lower than the number average molecular weight of the parent polymer AB, with a consequent increase in the polydispersity index.

**Example 5 (ABH1)** - Partial hydrogenation of the random linear polymer AB at a partial hydrogen pressure of 1,500 kPa with catalyst as Mg/Ti

After transferring 1 litre of polymeric solution containing the polymer AB, measured by means of a mass measuring instrument, into the hydrogenation reactor, the polymer solution was brought back to a temperature of 80°C and titanium dicyclopentadienyl dichloride, in a cyclohexane suspension, was added in a quantity of 120 ppm of titanium with respect to the rubber in solution; the reactor was then pressurized by adding hydrogen in such a quantity that its partial pressure at the reactor temperature was 1,500 kPa, and 0.18 mmoles of an alkylating agent consisting of butyl ethyl magnesium (BEM) in hexane were then added.

By operating completely analogously to what is described in example 1, after 20 minutes of reaction, IR analysis gave a hydrogenation degree of the polymer indicated as ABH1, a value equal to 40.2%; the molecular weight distribution was determined by means of gel permeation chromatography (GPC) which gave a value of the number average molecular weight of 221,000 g/mole and a polydispersity index value (Mw/Mn) equal to 1.07, for the hydrogenated product. MALLS analysis gave a value of the radius of gyration equal to 24 $\pm$ 1 nm (see Table 2).

**Example 6 (ABH2)** - Partial hydrogenation of the random linear polymer AB at a partial hydrogen pressure of 1,000 kPa with Mg/Ti as catalyst

After transferring 1 litre of polymeric solution containing the polymer AB, measured by means of a mass measuring instrument, into the hydrogenation reactor, the polymer solution was brought back to a temperature of 80°C and titanium dicyclopentadienyl dichloride, in a cyclohexane suspension, was added in a quantity of 120 ppm of titanium with respect to the rubber in solution; the reactor was then pressurized by adding hydrogen in such a quantity that its partial pressure at the reactor temperature was 1,000 kPa, and 0.18 mmoles of an alkylating agent consisting of butyl ethyl magnesium (BEM) in hexane were then added.

By operating completely analogously to what is described in example 1, after 20 minutes of reaction, IR analysis gave a hydrogenation degree of the polymer indicated as ABH2, a value equal to 39.5%; the molecular weight distribution was determined by means of gel permeation chromatography (GPC) which gave a value of the number average molecular weight of 220,000 g/mole and a polydispersity index value (Mw/Mn) equal to 1.06, for the hydrogenated product. MALLS analysis gave a value of the radius of gyration equal to 24 ± 1 nm (see Table 2).

**Example 7 (ABH3)** - Partial hydrogenation of the random linear polymer AB at a partial hydrogen pressure of 500 kPa with Mg/Ti as catalyst

After transferring 1 litre of polymeric solution containing the polymer AB, measured by means of a mass measuring instrument, into the hydrogenation reactor, the polymer solution was brought back to a temperature of 80°C and titanium dicyclopentadienyl dichloride, in a cyclohexane suspension, was added in a quantity of 120 ppm of titanium with respect to the rubber in solution; the reactor was then pressurized by adding hydrogen in such a quantity that its partial pressure at the reactor temperature was 500 kPa, and 0.18 mmoles of an alkylating agent consisting of butyl ethyl magnesium (BEM) in hexane were then added.

By operating using the same procedure as described in example 1, after 20 minutes of reaction, IR analysis gave a hydrogenation degree of the polymer indicated as ABH3, a value equal to 41.2%; the molecular weights distribution was determined by means of gel permeation chromatography (GPC) which gave a value of the number average molecular weight of 222,500 g/mole and a polydispersity index value (Mw/Mn) equal to 1.08, for the hydrogenated product. MALLS analysis gave a value of the radius of gyration equal to 24 ± 1 nm (see Table 2).

**Example 8 (ABH4)** - Treatment of the random linear polymer AB with the hydrogenation catalyst Mg/Ti in the absence of hydrogen

After transferring 1 litre of polymeric solution containing the polymer AB, measured by means of a mass measuring instrument, into the hydrogenation reactor, the polymer solution was brought back to a temperature of 80°C and titanium dicyclopentadienyl dichloride, in a cyclohexane suspension, was added in a quantity of 120 ppm of titanium with respect to the rubber in solution; a quantity of 0.18 mmoles of an alkylating agent consisting of butyl ethyl magnesium (BEM) in hexane were then added in the total absence of hydrogen.

After 20', during which the solution was maintained at 80°C, the reactor was discharged and, by operating using the same procedure as described in example number 1, the polymer indicated with the initials ABH4 was recovered, which, after the addition of antioxidants and drying, provided a value of the number average molecular weight equal to 229,000 g/mole and a polydispersity index value (Mw/Mn) equal to 1.12. MALLS analysis gave a value of the radius of gyration equal to 22 ± 1 nm (see table 2).

Table 2

|  | H$_2$ (kPa) | G.I. (%) | Mg/Ti (moles/moles) | Mn | Mw/Mn | r (nm) |
|---|---|---|---|---|---|---|
| **AB** | --- | 0 |  | 220,000 | 1.07 | 24 ± 1 |
| **ABH1** | 1500 | 40.2 | 1.2/1 | 221,000 | 1.07 | 24 ± 1 |
| **ABH2** | 1000 | 39.5 | 1.2/1 | 220,000 | 1.06 | 24 ± 1 |
| **ABH3** | 500 | 41.2 | 1.2/1 | 222,500 | 1.08 | 24 ± 1 |
| **ABH4** | 0 | 0 | 1.2/1 | 229,000 | 1.12 | 22 ± 1 |

The data of Table 2 show that the hydrogenation catalyst consisting of titanium dicyclopentadienyl dichloride and butyl ethyl magnesium does not produce any significant modifications in the macrostructure of the random styrene-butadiene copolymer AB synthesized as described in example 1 and that said macrostructure substantially maintains a polydispersity index and a branching degree in line with those of the parent polymer AB, consequently proving to be indifferent to the variations in the partial hydrogen pressure within the range of 500 to 1,500 kPa. Furthermore, in the absence of hydrogen, under the same conditions in which the hydrogenation was effected, the catalyst based on magnesium alkyl causes a modest branching and also a modest increase in the polydispersity index.

In short, the results shown in table 2 (magnesium alkyls as alkylating agents, according to the invention) are decisively better than those indicated in table 1 (lithium alkyls as alkylating agents).

**Comparative example 9 (ACH3\*)** - Preparation in continuous of the random linear styrene-butadiene copolymer (Styrene 40%; 1,2 40%, indicated as AC) and its partial hydrogenation at a partial hydrogen pressure of 500 kPa with Li/Ti as catalyst

The polymerization reaction is carried out in two reactors of the CSTR type in series, each having a volume of 100 litres destined for copolymerization, followed by a third 50 litre reactor to guarantee the almost complete conversion of the monomers (>95.5%) and a mixer on line for the feeding of the termination agent consisting of trimethyl chlorosilane (TMCS) added in such a quantity that the molar ratio with the n-butyl lithium used falls within the range of 0.95 - 1.05. The residence time in the mixer was about a half of that of a single reactor, consequently sufficient for making sure that the termination reaction had been completed; both reactors were equipped with a wall-cleaning system, consisting of a wall-scraper, integral with the shaft of the stirrer. The feeding of the reaction ingredients was effected with the use of measurers of the mass type. The mixture of the reagents (cyclohexane, styrene, butadiene, vinyl promoter agent consisting of THFA-ethyl and anti-fouling agent) was prepared in a stirred reactor and in the presence of nitrogen in a quantity sufficient for guaranteeing a significant polymerization run, maintaining the feeding composition of the reagents constant vs time.

The initiator, (n-butyl lithium in a hexane solution) was fed at the inlet of the first reactor. The first polymerization reactor was of the boiling type; in steady state conditions it was not completely full and part of the solvent was condensed and recycled in the reactor; as a consequence the pressure regulation of the reactor also defined and regulated the temperature.

All of the ingredients were fed from the reactor bottom; the variation in the residence time was controlled through a variation in the feeding flow-rates. A further control of the temperature was possible by regulating the temperature of the solvent and monomers at the inlet to the first reactor, using heat exchangers.

A copolymerization of butadiene and styrene was carried out under the above-mentioned conditions, by feeding the solution in hexane of the monomers containing 7.2% by weight of butadiene and 4.8% by weight of styrene, together with a quantity of THFA-ethyl which was such as to maintain the molar ratio between the randomizing agent and lithium within the range of 4.2 - 4.5. The total quantity of reagents and solvent was regulated so that the residence time in the first reactor was 60 minutes, at a temperature of $92 \pm 2°C$. The quantity of n-butyl lithium fed was equal to $0.028 \pm 0.003$ g per 100 g of the mixture of monomers (hereafter indicated as phm, part per hundred monomers). A conversion of $88 \pm 5\%$ was observed in the first reactor, whereas in the second reactor the conversion was higher than 98%. Vapour was circulated in the jacket, in a quantity suitable for keeping the temperature within the range of $95 \pm 2°C$, in order to maintain the desired temperature in the second reactor, where the reaction rate was lower with respect to the first, due to the lower concentration of monomers. In the third reactor, also maintained at a temperature of $95 \pm 2°C$, the reaction was completed, and the resulting conversion was higher than 99%. The termination agent (TMCS) used in a molar ratio almost unitary with respect to the n-butyl lithium adopted, was fed to the mixer on-line.

Before the addition of an oil-extender, an aliquot of the polymeric solution was then transferred to an anhydrous 20 litre recipient, with oxygen free nitrogen, and from there fed to the hydrogenation reactor, in 1 litre batches. In this way it was possible to guarantee a polymer supply sufficient for carryng out various hydrogenation tests under different experimental conditions, always using the same parent polymer.

With the use of an on-line mixer, a non-aromatic TDAE oil was added to the polymeric solution, in a quantity of $27.5 \pm 1\%$ and a mixture of antioxidants consisting of Irganox® 565 and Irgafos 168® in such a quantity that their content in the rubber was equal to 0.1 and 0.4%, respectively. Analysis of the resulting polymer gave a number average molecular weight of 255,000 g/mole, a polydispersity index of 2.3, a styrene content of 41.3% by weight and a content of vinyl unit equal to 39.9%, with respect to the diene part of the copolymer. The value of the alpha parameter correlated to the branching degree proved to be equal to 0,58, whereas the absence of blocks was complete.

The Tg of the polymer, measured by means of DSC proved to be -24.5°C and the Mooney viscosity at 100°C of the parent polymer, oil-extended and called AC, was equal to 55.

After transferring two litres of polymeric solution containing the polymer AC, measured by means of a mass measurer, into the hydrogenation reactor, the polymeric solution was brought to a temperature of 80°C and titanium dicyclopentadienyl dichloride in a suspension of cyclohexane, was added in a quantity equal to 120 ppm of titanium with respect to the polymer in solution; the reactor was then pressurized by adding hydrogen in such a quantity as to have a partial pressure, at the temperature of the reactor, of 500 kPa, and 1.83 mmoles of an alkylating agent consisting of n-butyl lithium (nBL) were then added.

After 15 minutes, IR analysis gave a value of 40.2% for the hydrogenation degree of the polymer indicated as ACH3*; the reactor was then discharged, and 0.1 phr of Irganox 565 and 0.5 phr of Irgafox 168 and non-aromatic TDAE oil, in a quantity equal to 27.5 ± 1.5%, were added to the polymeric solution.

The solvent was subsequently eliminated by stripping under a stream of vapour. The rubber, after squeezing, was then dried in a vacuum oven for at least 36 hours at a temperature of 70°C. The determination of the molecular weight distribution effected by means of gel permeation chromatography (GPC) provided an Mn value of 245,000 g/mole and a polydispersity index value (Mw/Mn) of 2.8 for the hydrogenated product. GPC-MALLS analysis gave an alpha value equal to 0.52, showing a branching of modest extension (see table 3), whereas the Mooney viscosity of the oil-extended polymer proved to be 50.

**Comparative example 10 (BCH3*)** - Preparation in continuous of the linear styrene - butadiene copolymer (Styrene 25%; 1,2 64%) and its partial hydrogenation at a partial hydrogen pressure of 500 kPa with Li/Ti as catalyst

Analogously to what is described in example 9, the hexane solution of monomers containing 9% in weight of butadiene and 3% by weight of styrene is fed to the first reactor together with a quantity of THFA-Ethyl which is such as to maintain the ratio between randomizing agent and lithium within the range of 5.3 ÷ 5.7. The total quantity of reagents and solvent was regulated so that the residence time in the first reactor was 60 minutes, at a temperature of 57 ± 2°C. The quantity of n-butyl lithium fed was equal to 0.028 ± 0.003 g per 100 g of the mixture of monomers. A conversion of 75±5% was observed in the first reactor, whereas in the second reactor the conversion was higher than 95%. In order to maintain the desired temperature in the second reactor, in which the reaction rate was lower with respect to the first reactor due to the lower concentration of monomers, vapour was circulated in the jacket in a quantity suitable for maintaining the temperature within the range of 57+2°C. In the third reactor, also maintained at a temperature of 57±2°C, the reaction was completed and the resulting conversion was higher than 96%.

The conversion measurement was carried out by means of gas-chromatographic analysis of the residual monomers in the polymeric solution.

The termination agent (TMCS) used in a molar ratio almost unitary with respect to the n-butyl lithium adopted, was fed into the mixer on-line.

Before the addition of the oil-extender, part of the polymeric solution was then transferred to a 20 litre anhydrous container, inertized with oxygen-free nitrogen and fed therefrom in 1 litre batches to the hydrogenation reactor. In this way it was possible to guarantee a polymer supply sufficient to have various hydrogenation tests under different experimental conditions always using the same parent polymer.

Non-aromatic TDAE oil was added to the polymeric solution in a quantity of 27.5 ± 1.5%, using an on-line mixer together with a mixture of antioxidants consisting of Irganox® 565 and Irgafos® 168 in such a quantity that their content in the rubber was equal to 0.1 and 0.4% respectively.

The determination of the molecular weight distribution effected by means of Gel Permeation Chromatography (GPC) gave a value of the number average molecular weight Mn equal to 248,000 and a polydispersity index value (Mw/Mn) equal to 2.2. GPC-MALLS analysis gave an alpha value of 0.58, typical of a linear polymer. IR analysis gave for the content of the 1,2 units, a percentage equal to 65.9%.

The oxidative demolition of the polymer, followed by HPLC analysis, revealed the absence of styrene blocks; the glass transition temperature (Tg) measured with a differential scanning calorimeter (DSC) gave a value of -20.1°C; the Mooney viscosity measured at 100°C of the oil-extended parent polymer (BC) proved to be equal to 54.

After transferring two litres of polymeric solution containing the parent polymer BC, measured by means of a mass measurer, into the hydrogenation reactor, the polymeric solution was brought to a temperature of 80°C and titanium dicyclopentadienyl dichloride in a suspension of cyclohexane, was added in a quantity of 120 ppm of titanium with respect to the rubber in solution; the reactor was then pressurized by adding hydrogen in such a quantity that its partial pressure at the reactor temperature proved to be 500 kPa, and 1.83 mmoles of an alkylating agent consisting of n-butyl lithium (nBL) were then added.

After 15 minutes of reaction, IR analysis gave a value of 40.0% for the hydrogenation degree of the polymer called BCH3*. The reactor was then discharged, 0.1 phr of Irganox™ 565 and 0.5 phr of Irgafos™ 168 were added, together with non-aromatic TDAE oil in a quantity of 27.5 ± 1.5%.

The solvent was eliminated by stripping in a stream of vapour. After squeezing, the rubber was then dried in a vacuum oven for at least 36 hours, at a temperature of 70°C. The determination of the molecular weight distribution, effected by means of Gel Permeation Chromatography (GPC) gave a value of the number average molecular weight of 260,000 g/mole and a polydispersity index value (Mw/Mn) equal to 2.7 for the hydrogenated product. GPC-MALLS analysis gave an alpha value equal to 0.51. The measurement of the Mooney viscosity of the oil-extended polymer proved to be equal to 49 (table 3).

**Comparative example 11 (CCH3*)** - Preparation in continuous of the random linear styrene-butadiene copolymer (Styrene 25%, 1,2 25% indicated as CC) and its partial hydrogenation at a partial hydrogen pressure of 500 kPa with Li/Ti as catalyst.

Analogously to what is described in example 9, the solution in hexane of the monomers containing 9% by weight of butadiene and 3% by weight of styrene, was fed to the first reactor, contemporaneously regulating the temperature so as to maintain the temperature of the first reactor between $93 \pm 3°C$. A quantity of n-butyl lithium equal to $0.026 \pm 0.003$ phr and THFA-Ethyl in such a quantity as to maintain the THFA-Ethyl/Li ratio within the range of $2.3 \div 2.7$, was fed together with the mixture of monomers. The total conversion at the end of the series of reactions was equal to 98.9%.

Before the addition of the extending oil, an aliquot of the polymeric solution was transferred to a 20 litre anhydrous container, inertized with oxygen-free nitrogen and was then fed in 1 litre batches to the hydrogenation reactor. In this way a sufficient supply of polymer was guaranteed to have various hydrogenation tests under different experimental conditions, always using the same parent polymer.

Non-aromatic TDAE oil, in a quantity of $27.5 \pm 1.5\%$ and a mixture of antioxidants consisting of Irganox® 565 and Irgafos® 168 in such an amount that their content in the rubber was equal to 0.1 and 0.4% respectively, were added to the polymeric solution, using an on-line mixer.

GPC analysis of the polymer after termination with TMCS gave a number average molecular weight of 252,000 g/mole and a molecular weight dispersion (Mw/Mn) equal to 2.2, a styrene content of 25.7% and a vinyl quantity of 24.8%. The alpha value was to 0.55. The polymer Tg was - 50.2°C; the Mooney viscosity of the oil- extended polymer measured at 100°C was equal to 56.

After transferring 2 litres of polymeric solution containing the polymer CC, measured by means of a mass measurer, into the hydrogenation reactor, the polymeric solution was brought to a temperature of 80°C and titanium dicyclopentadienyl dichloride, in a cyclohexane suspension, was added in a quantity of 120 ppm of titanium with respect to the rubber in solution; the reactor was then pressurized by adding hydrogen in such an amount that its partial pressure at the reactor temperature proved to be 500 kPa, and 1.83 mmoles of an alkylating agent consisting of n-butyl lithium (nBL) was then added.

After 15 minutes of reaction, IR analysis showed a hydrogenation degree of the polymer indicated as CCH3* equal to 38.9%. The reactor was then discharged, 0.1 phr of Irganox® 565, 0.5 phr of Irgafos® 168 and non-aromatic TDAE oil were then added to the polymeric solution in a quantity of $27.5 \pm 1.5\%$.

The solvent was then eliminated by stripping in a stream of vapour. After squeezing, the rubber was then dried in a vacuum oven for at least 36 hours, at a temperature of 70°C. The determination of the molecular weight distribution, effected by means of Gel Permeation Chromatography (GPC) gave a value of the number average molecular weight of 270,000 g/mole and a polydispersity index value (Mw/Mn) equal to 2.6 for the hydrogenated product. GPC-MALLS analysis gave an alpha value equal to 0.50 (see table 3). The Mooney viscosity of the oil-extended polymer proved to be equal to 48.

**Example 12 (ACH3)** - Partial hydrogenation of the polymer AC at a partial hydrogen pressure of 500 kPa with Mg/Ti as catalyst

Under the same conditions described in example 9, after transferring two litres of polymeric solution containing the polymer AC, measured by means of a mass measurer, into the hydrogenation reactor, the polymeric solution was brought to a temperature of 80°C and titanium dicyclopentadienyl dichloride, in a suspension of cyclohexane, was added in a quantity equal to 120 ppm of titanium with respect to the rubber in solution. The reactor was then pressurized by adding hydrogen in such a quantity that its partial pressure, at the temperature of the reactor, was 500 kPa, and 0.55 mmoles of alkylating agent consisting of butyl ethyl magnesium were then added.

After 15 minutes of reaction, IR analysis showed a hydrogenation degree of 40.2%. The determination of the molecular weight distribution effected by Gel Permeation Chromatography (GPC) gave a value of the number average molecular weight of 260,000 g/mole and a dispersity index value (Mw/Mn) equal to 2.3. GPC-MALLS analysis gave an alpha value of 0.58 (see table 3). The Mooney viscosity of the oil-extended polymer was equal to 55.

**Example 13 (BCH3)** - Partial hydrogenation at a partial hydrogen pressure of 500 kPa of the polymer BC with Mg/Ti as catalyst

Under the same conditions described in example 9, after transferring two litres of polymeric solution containing the polymer BC, measured by means of a mass measurer, into the hydrogenation reactor, the polymeric solution was brought to a temperature of 80°C and titanium dicyclopentadienyl dichloride, in a suspension of cyclohexane, was added in a quantity equal to 120 ppm of titanium with respect to the rubber in solution. The reactor was then pressurized by

13

adding hydrogen in such a quantity that its partial pressure, at the temperature of the reactor, was 500 kPa, and 0.55 mmoles of alkylating agent consisting of butyl ethyl magnesium were then added.

After 15 minutes of reaction, IR analysis gave a hydrogenation degree of 40.0%. The determination of the molecular weight distribution effected by Gel Permeation Chromatography (GPC) gave a value of the number average molecular weight of 255,000 g/mole and a polydispersity index value (Mw/Mn) equal to 2.3. GPC-MALLS analysis gave an alpha value of 0.58. The Mooney viscosity of the oil-extended polymer was equal to 55 (see table 3).

**Example 14 (CCH3)** - Partial hydrogenation of the copolymer ASC at a partial hydrogen pressure of 500 kPa with Mg/Ti as catalyst

Under the same conditions described in example 9, after transferring two litres of polymeric solution containing the polymer CC, measured by means of a mass measurer, into the hydrogenation reactor, the polymeric solution was brought to a temperature of 80°C and titanium dicyclopentadienyl dichloride, in a suspension of cyclohexane, was added in a quantity equal to 120 ppm of titanium with respect to the rubber in solution; the reactor was then pressurized by adding hydrogen in such a quantity that its partial pressure, at the temperature of the reactor, was 500 kPa, and 0.55 mmoles of alkylating agent consisting of butyl ethyl magnesium were then added.

After 15 minutes of reaction, IR analysis gave a hydrogenation degree of 38.9%. The determination of the molecular weight distribution effected by Gel Permeation Chromatography (GPC) gave a value of the number average molecular weight of 240,000 g/mole and a dispersity index value (Mw/Mn) equal to 2.3. GPC-MALLS analysis gave an alpha value of 0.58. The Mooney viscosity of the oil-extended polymer was equal to 55 (see table 3).

Table 3

|  | Mn ($10^3$) | Mw/Mn | $H_2$ (kPa) | G.i, (%) | Mg/Ti (m/m) | Li/Ti (m/m) | $\alpha$ | ML (OE) |
|---|---|---|---|---|---|---|---|---|
| AC | 255 | 2.3 | --- | 0 | | | 0.58 | 55 |
| ACH3* | 245 | 2.8 | 500 | 40.2 | | 4/1 | 0.52 | 50 |
| ACH3 | 260 | 2.3 | 500- | 40.2 | 1.2/1 | | 0.58 | 55 |
| BC | 248 | 2.2 | --- | 0 | | | 0.58 | 54 |
| BCH3* | 260 | 2.7 | 500 | 40.0 | | 4/1 | 0.51 | 49 |
| BCH3 | 255 | 2.3 | 500 | 40.0 | 1.2/1 | | 0.58 | 55 |
| CC | 252 | 2.2 | | 0 | | | 0.55 | 56 |
| CCH3* | 270 | 2.6 | 500 | 38.9 | | 4/1 | 0.50 | 48 |
| CCH3 | 240 | 2.3 | 500 | 38.9 | 1.2/1 | | 0.58 | 55 |

**Example 15 (sample AC$_R$)** Preparation in continuous of the branched styrene - butadiene copolymer [Styrene 40%; 1,2 40%]

In a configuration analogous to that described in example 9, the copolymerization was effected of a mixture of butadiene and styrene (7.2% and 4.8% by weight, respectively) feeding a quantity of n-butyl lithium at $0.024 \pm 0.003$ phm and THFA-ethyl in such a quantity as to maintain the molar ratio THFA-ethyl/Li within the range of $4.2 \div 4.5$. By fixing the temperature of the fluids at the inlet of the first reactor, the temperature of the first reactor was maintained at a value of $92 \pm 2°C$.

A conversion of $85 \pm 5\%$ was observed in the first reactor, whereas in the second reactor the conversion was higher than 96%. In order to maintain the desired temperature in the second reactor, in which the reaction rate was lower with respect to the first reactor due to the lower concentration of the monomers, vapour was circulated in the jacket in a suitable quantity for maintaining the temperature within the range of $95 \pm 2°C$. In the third reactor, also maintained at a temperature of $95 \pm 2°C$, the reaction was completed and the resulting conversion was higher than 98%.

At the end of the series of reactions an aliquot of $0.05 \pm 0.03$ phm of butyl lithium was added making use of a specific on-line mixer, followed by the addition of 0.150 phm of Br-octyl, the residence time in the mixer being about a fifth of that of the first reactor.

Before the addition of the extending-oil, an aliquot of the polymeric solution was then transferred to a 20 litre anhydrous container inertized with oxygen-free nitrogen and fed from this in 2 litre batches to the hydrogenation reactor. In this way, it was possible to guarantee a supply of polymer sufficient for effecting various hydrogenation tests under different experimental conditions, always using the same parent polymer.

Non-aromatic TDAE oil was added to the polymeric solution, usin of an on-line mixer, in a quantity of 27.5 $\pm$ 1.5% in addition to a mixture of antioxidants consist-ing of Irganox® 565 and Irgafos® 168 in such a quantity that their content in the rubber proved to be equal to 0.1 and 0.4%, respectively.

Characterization of the branched polymer gave a value of the weight average molecular weight determined by means of MALLS, equal to 615,000 and a value of the alpha coefficient equal to 0.52. The styrene content proved to be equal to 40.5% and that of the vinyl unit equal to 40.2%. The polydispersity index value, determined by means of GPC, proved to be 2.5. The Tg of the polymer was equal to -23.5°C. The Mooney viscosity of the oil-extended polymer proved to be equal to 57 (see Table 4) .

**Comparative example 16** - Partial hydrogenation of the branched polymer AC with the catalyst Li/Ti ($AC_R$H3*)

After transferring two litres of the polymeric solution containing the polymer $AC_r$, measured by means of a mass metering device, to the hydrogenation reactor, the polymeric solution was brought to a temperature of 80°C and titanium dicyclopentadienyl dichloride in a cyclohexane suspension was added in a quantity equal to 120 ppm of titanium with respect to the rubber in solution. The reactor was then pressurized by adding hydrogen in such a quantity that its partial pressure, at the reactor temperature, was 500 kPa, and 1.83 mmoles of alkylating agent consisting of n-butyl lithium (nBL) were then added.

After 15 minutes of reaction, IR analysis gave a hydrogenation degree of the polymer indicated as $AC_R$H3* a value of 40.2%. The reactor was then discharged, 0.1 phr of Irganox™ 565 and 0.5 phr of Irgafos™ 168 and nonaromatic TDAE oil were added to the polymeric solution in a quantity equal to 27.5 $\pm$ 1.5%.

The solvent was then eliminated by stripping in a stream of vapour. After squeezing, the rubber was then dried in a vacuum oven for at least 36 hours, at a temperature of 70°C. The determination of the molecular weight distribution effected by means of Gel Permeation Chromatography (GPC) gave a value of the weight average molecular weight of 780,000 and a polydispersity index value (Mw/Mn) of 2.8 for the hydrogenated product. GPC-MALLS analysis gave an alpha value equal to 0.46. The Mooney viscosity of the oil-extended polymer proved to be equal to 50 (see table 4).

**Example 17** - Partial hydrogenation of the polymer $AC_R$ with Mg/Ti (**$AC_R$H3**)

Analogously to what is described in example 16, the polymeric solution containing the polymer $AC_R$ was hydrogenated using butyl ethyl magnesium as alkylating agent, instead of n-butyl lithium, which was added in molar ratios equal to 1.2 with respect to the titanium. The characteristics of the polymer $AC_R$H3 are indicated in table 4.

Table 4

| Sample | $H_2$ (kPa) | Mw ($10^3$) | Mw/Mn | G.I. | $\alpha$ | ML (OE) |
|---|---|---|---|---|---|---|
| $AC_R$ | | 615 | 2.5 | 0 | 0.52 | 57 |
| $AC_R$H3* | 500 | 780 | 2.8 | 40.2 | 0.46 | 50 |
| $AC_R$H3 | 500 | 634 | 2.5 | 41 | 0.52 | 59 |

**Comments on examples 9-17**

The partial hydrogenation of random styrene-butadiene copolymers synthesized in a continuous reactor, was effected with a partial hydrogen pressure kept within 500 kPa to avoid values of the hydrogenation degree higher than the pre-established values. As a result of the high viscosity of the polymeric solution caused by the presence in solution of polymers having a molecular weight distribution characterized by a polydispersity index higher than 2 and with a high molecular weight, the passage of hydrogen from the gas phase to the liquid phase generally proved to be an extremely critical point. Hydrogenation catalysts are necessary; they must be capable of hydrogenating the double bonds in sufficiently rapid times but which, at the same time, do not have the tendency of coordinating with them, causing the formation of branching reactions or breakage of the polymeric chain.

In the presence of chelating ethers, in the particular case of THFA-Ethyl, useful for a correct vinyl-promotion and randomizing of the vinyl aromatic unit, this type of phenomena is particularly evident.

The use of a catalyst based on Li/Ti under the experimental conditions adopted, generally causes, in any experimental situation examined, a widening of the molecular weight distribution, in both the low molecular weight and high molecular weight ranges, in the latter range mainly due to the formation of a further aliquot of branched chains, as indicated by the decreasing alpha value.

The increase in the quantity of low molecular weights has, as a first result, a decrease in the Mooney viscosity, which becomes lower than that of the starting polymer; the result is a general deterioration in the mechanical properties of the vulcanized polymer.

The use of a hydrogenation catalyst based on Mg/Ti, on the contrary, allows the elimination of or at least an evident and significant reduction in the variation of the molecular weight distribution, under the experimental conditions adopted for an easy control of the hydrogenation degree. This leads to a reduced increase in the Mooney viscosity not deriving from the formation of an incremental fraction of branched polymer, with a consequent preservation/improvement of the mechanical and dynamic properties of the polymer.

**Claims**

1.  A process for the partial hydrogenation of random vinyl arene - conjugated diene copolymers, both linear and branched, the latter term meaning copolymers in which the macromolecules are bound to each other by means of carbon-carbon bonds and in which the branchings mainly interest the high or very high molecular weight chains, the above-mentioned random copolymers being prepared in solution, in the presence of 2-methoxyethyl tetrahydrofuran as randomizing agent, which comprises:

    reacting the random vinyl arene-conjugated diene copolymer dissolved in a hydrocarbon solvent, with hydrogen, in the presence of a titanium complex and an alkylating agent, until the desired hydrogenation degree is obtained, the above process being **characterized in that** the alkylating agent is selected from compounds having the general formula **MgR$_1$R$_2$,**
    wherein **R$_1$** and **R$_2$,** the same or different, are selected from alkyl radicals having from 1 to 12 carbon atoms, and wherein the hydrogenation degree ranges from 20 to 90%.

2.  The process according to claim 1, wherein R$_1$ and R$_2$, the same or different, are selected from alkyl radicals having from 2 to 8 atoms of carbon.

3.  The process according to claim 1, wherein the vinyl arene is styrene and the conjugated diene is 1,3-butadiene.

4.  The process according to claim 1, wherein the partial hydrogenation is effected at a pressure ranging from 400 to 2,000 kPa and a temperature ranging from 70 to 150°C.

5.  The process according to claim 4, wherein the partial hydrogenation is carried out at a pressure ranging from 500 to 1,500 kPa and a temperature ranging from 80 to 110°C.

6.  The process according to claim 1, wherein the hydrogenation degree ranges from 25 to 85%

7.  The process according to claim 1, wherein the titanium complex is present in a quantity of 25 to 200 ppm of titanium, preferably from 75 to 150 ppm.

8.  The process according to claim 1, wherein the Mg/Ti molar ratio ranges to 0.8/1 to 2/1, preferably from 1/1 to 1.5/1.

9.  The process according to claim 1, wherein random styrene-butadiene copolymers, both linear and branched, have a styrene content ranging from 15 to 50% weight, preferably from 20 to 45% by weight.

10. The process according to claim 1, wherein the content of vinyl unit of the diene portion of the random styrene-butadiene copolymer before the partial hydrogenation preferably ranges from 10 to 80%, even more preferably from 20 to 70%.

11. The process according to claim 1, wherein the random styrene-butadiene copolymer, both linear and branched, to be subjected to hydrogenation, has a weight average molecular weight (Mw) ranging from 200,000 to 1,000,000 and a molecular weight distribution (Mw/Mn) ranging from 1 to 5, the Mw preferably ranges from 300,000 to 800,000 and the Mw/Mn from 1 to 4, more preferably from 1 to 3, wherein the weight average molecular weight and the molecular weight distribution are measured according to the methods indicated in the experimental section.

## Patentansprüche

1. Verfahren zur teilweisen Hydrogenierung von statistischen Vinylaren-konjugierten Dien-Copolymeren, sowohl linear als auch verzweigt, wobei der letztere Begriff sich auf Copolymere bezieht, in denen die Makromoleküle mittels Kohlenstoff-Kohlenstoff-Bindungen aneinander gebunden sind und in denen die Verzweigungen im Wesentlichen Ketten von hohem oder sehr hohem Molekulargewicht betreffen, wobei die zuvor erwähnten statistischen Copolymere in Lösung hergestellt werden, in der Gegenwart von 2-Methoxyethyltetrahydrofuran als Randomisierungsmittel, umfassend:

   Umsetzen des in einem Kohlenwasserstofflösemittel aufgelösten statistischen Vinylaren-konjugierten Dien-Copolymers mit Wasserstoff in der Gegenwart eines Titankomplexes und eines Alkylierungsmittels bis der gewünschte Hydrogenierungsgrad erreicht wird, wobei das Verfahren **dadurch gekennzeichnet ist, dass** das Alkylierungsmittel ausgewählt ist aus Verbindungen mit der allgemeinen Formel $MgR_1R_2$, wobei $R_1$ und $R_2$, gleich oder verschieden, ausgewählt sind aus Alkylresten mit 1 bis 12 Kohlenstoffatomen, und wobei der Hydrogenierungsgrad in einem Bereich von 20 bis 90 % liegt.

2. Verfahren nach Anspruch 1, worin $R_1$ und $R_2$, gleich oder verschieden, ausgewählt sind aus Alkylresten mit 2 bis 8 Kohlenstoffatomen.

3. Verfahren nach Anspruch 1, worin das Vinylaren Styren ist und das konjugierte Dien 1,3-Butadien ist.

4. Verfahren nach Anspruch 1, worin die teilweise Hydrogenierung bewirkt wird bei einem Druck in einem Bereich von 400 bis 2 000 kPa und einer Temperatur in einem Bereich von 70 bis 150°C.

5. Verfahren nach Anspruch 4, worin die teilweise Hydrogenierung durchgeführt wird bei einem Druck in einem Bereich von 500 bis 1 500 kPa und einer Temperatur in einem Bereich von 80 bis 110°C.

6. Verfahren nach Anspruch 1, worin der Hydrogenierungsgrad in einem Bereich von 25 bis 85 % liegt.

7. Verfahren nach Anspruch 1, worin der Titankomplex in einer Menge von 25 bis 200 ppm Titan, vorzugsweise von 75 bis 150 ppm, vorliegt.

8. Verfahren nach Anspruch 1, worin das Mol-Verhältnis Mg/Ti in einem Bereich von 0,8/1 bis 2/1, vorzugsweise von 1/1 bis 1,5/1, liegt.

9. Verfahren nach Anspruch 1, worin die statistischen Styrenbutadien-Copolymere, sowohl linear als auch verzweigt, einen Styren-Gehalt in einem Bereich von 15 bis 50 Gew.-%, vorzugsweise von 20 bis 45 Gew.-%, haben.

10. Verfahren nach Anspruch 1, worin der Gehalt an Vinyleinheit des Dien-Anteils des statistischen Styrenbutadien-Copolymers vor der teilweisen Hydrogenierung vorzugsweise in einem Bereich von 10 bis 80 % liegt, gerade noch bevorzugter von 20 bis 70 %.

11. Verfahren nach Anspruch 1, worin das statistische Styrenbutadien-Copolymer, sowohl linear als auch verzweigt, das der Hydrogenierung unterworfen wird, ein Gewichtsmittel-Molekulargewicht (Mw) in einem Bereich von 200 000 bis 1 000 000 und eine Molekulargewichtsverteilung (Mw/Mn) in einem Bereich von 1 bis 5 hat, wobei Mw vorzugsweise in einem Bereich von 300 000 bis 800 000 und Mw/Mn von 1 bis 4 liegt, mehr bevorzugt von 1 bis 3, wobei das Gewichtsmittel-Molekulargewicht und die Molekulargewichtsverteilung gemessen werden gemäß den im experimentellen Teil angegebenen Verfahren.

## Revendications

1. Procédé en vue de l'hydrogénation partielle de copolymères statistiques de vinyl-arène et diène conjugué, tant linéaires que ramifiés, ce dernier adjectif désignant des copolymères dans lesquels les macromolécules sont liées les unes aux autres par des liaisons carbone-carbone et dans lesquels les ramifications concernent principalement les chaînes de masse moléculaire élevée ou très élevée, les copolymères statistiques déjà cités ayant été préparés en solution, en présence de 2-méthoxyéthyl-tétrahydrofurane en tant qu'agent de distribution statistique, lequel procédé comprend le fait de :

- faire réagir le copolymère statistique de vinyl-arène et diène conjugué, dissous dans un solvant hydrocarboné, avec de l'hydrogène, en présence d'un complexe de titane et d'un agent d'alkylation, jusqu'à ce que le degré d'hydrogénation voulu soit atteint,

le procédé mentionné précédemment étant **caractérisé en ce que** l'agent d'alkylation est choisi parmi les composés répondant à la formule générale

$$MgR_1R_2,$$

dans laquelle $R_1$ et $R_2$ représentent des groupes, identiques ou différents, choisis parmi les groupes alkyle comportant de 1 à 12 atomes de carbone, et le degré d'hydrogénation étant compris dans l'intervalle allant de 20 % à 90 %.

2. Procédé conforme à la revendication 1, dans lequel $R_1$ et $R_2$ représentent des groupes, identiques ou différents, choisis parmi les groupes alkyle comportant de 2 à 8 atomes de carbone.

3. Procédé conforme à la revendication 1, dans lequel le vinyl-arène est du styrène et le diène conjugué est du 1,3-butadiène.

4. Procédé conforme à la revendication 1, dans lequel l'hydrogénation partielle est réalisée sous une pression de 400 à 2000 kPa et à une température de 70 °C à 150 °C.

5. Procédé conforme à la revendication 4, dans lequel l'hydrogénation partielle est réalisée sous une pression de 500 à 1500 kPa et à une température de 80 °C à 110 °C.

6. Procédé conforme à la revendication 1, dans lequel le degré d'hydrogénation est compris dans l'intervalle allant de 25 % à 85 %.

7. Procédé conforme à la revendication 1, dans lequel le complexe de titane se trouve en une quantité représentant 25 à 200 ppm de titane, et de préférence de 75 à 150 ppm de titane.

8. Procédé conforme à la revendication 1, dans lequel le rapport molaire Mg/Ti est compris dans l'intervalle allant de 0,8/1 à 2/1, et de préférence de 1/1 à 1,5/1.

9. Procédé conforme à la revendication 1, dans lequel les copolymères statistiques de styrène et butadiène, tant linéaires que ramifiés, ont une teneur en styrène représentant une proportion de 15 % à 50 % en poids, et de préférence 20 % à 45 % en poids.

10. Procédé conforme à la revendication 1, dans lequel le pourcentage de motifs vinyle dans la fraction diène du copolymère statistique de styrène et butadiène, avant l'hydrogénation partielle, est compris, de préférence, dans l'intervalle allant de 10 % à 80 %, et mieux encore de 20 % à 70 %.

11. Procédé conforme à la revendication 1, dans lequel le copolymère statistique de styrène et butadiène, tant linéaire que ramifié, qui doit être soumis à l'hydrogénation, présente une masse molaire moyenne en poids (Mp) comprise dans l'intervalle allant de 200 000 à 1 000 000 et une distribution de masses molaires (Mp/Mn) comprise dans l'intervalle allant de 1 à 5, de préférence, la valeur de Mp est comprise dans l'intervalle allant de 300 000 à 800 000 et le rapport Mp/Mn vaut de 1 à 4, et mieux encore de 1 à 3, étant entendu que la masse molaire moyenne en poids et la distribution des masses molaires sont déterminées conformément aux méthodes décrites dans la section expérimentale.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4429090 A
- US 4429091 A
- US 6858683 A
- EP 0816382 A

**Non-patent literature cited in the description**

- **I.M. KOLTHOFF et al.** *J. Polymer Science,* 1946, vol. 1, 429
- **VIOLA.** Sequence distribution of styrene-butadiene copolymers by ozonolysis, HPLC (high performance liquid chromatography and gas chromatographic-mass spectrometric techniques. *J Chromatography A,* 1994, 117
- **GT VIOLA.** Polymer Chemistry. *Journal of Polymer Science Pr. A,* 1997, vol. 35, 17-25
- *CHEMICAL ABSTRACTS,* 991-84-4
- *CHEMICAL ABSTRACTS,* 31570-04-4
- Classical Light Scattering from Polymer Solutions. **PAVEL KRATOCHVIL.** Polymer Science Library. Elsevier Science Publishers BV, 1987, vol. 5